(19) Europäisches Patentamt
European Patent Office
Office européen des brevets

(11) EP 3 696 221 A1

(12) # EUROPEAN PATENT APPLICATION

(43) Date of publication:
**19.08.2020 Bulletin 2020/34**

(51) Int Cl.:
***C08K 3/10*** *(2018.01)* ***C09J 7/38*** *(2018.01)*

(21) Application number: **20156913.4**

(22) Date of filing: **12.02.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.02.2019 JP 2019025855**

(71) Applicant: **Nitto Denko Corporation**
**Ibaraki-shi, Osaka 567-8680 (JP)**

(72) Inventors:
- **SUZUKI, Tatsuya**
  **Ibaraki-shi, Osaka 567-8680 (JP)**
- **HIRAO, Akira**
  **Ibaraki-shi, Osaka 567-8680 (JP)**
- **IEDA, Hiroki**
  **Ibaraki-shi, Osaka 567-8680 (JP)**

(74) Representative: **Müller-Boré & Partner**
**Patentanwälte PartG mbB**
**Friedenheimer Brücke 21**
**80639 München (DE)**

(54) **PRESSURE-SENSITIVE ADHESIVE LAYER AND PRESSURE-SENSITIVE ADHESIVE SHEET**

(57) Provided are a PSA layer having a high refractive index and high adhesive strength and a PSA sheet having the PSA layer. The PSA layer comprises a PSA obtained using a PSA composition comprising a base polymer. Here, the PSA layer has a refractive index of 1.54 or higher and the base polymer has a glass transition temperature of 5 °C or lower.

[Fig. 1]

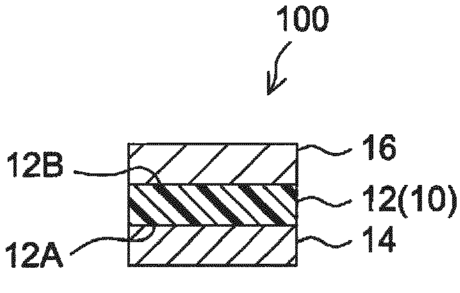


EP 3 696 221 A1

## Description

This application claims priority to Japanese Patent Application No. 2019-025855 filed on February 15, 2019 and the entire content thereof is incorporated herein by reference.

This invention relates to a pressure-sensitive adhesive layer and a pressure-sensitive adhesive sheet having the pressure-sensitive adhesive layer.

In general, pressure-sensitive adhesive (PSA) exists as a soft solid (a viscoelastic material) in a room temperature range and has a property to adhere easily to an adherend with some pressure applied. For this property, PSA has been widely used in various industrial fields such as home appliance, automobiles and OA equipment, typically as a PSA sheet that includes a PSA layer.

PSA sheets are preferably used for attaching and fixing various optical members, for instance, in displays such as liquid crystal displays and organic EL displays as well as in other electronic devices. Technical documents related to this type of PSA sheet include Japanese Patent Application Publication No. 2018-72837.

When attaching various optical members using a PSA sheet, the PSA layer is typically placed between two optical members and the two optical members are pushed against each other for attachment. During this, the sort of light scattering occurs at the interfaces between the PSA layer and the optical members due to their differences in refractive index; and this problematically causes the laminate of the attached optical members (e.g. a laminate of one optical member, the PSA layer and another optical member) to suffer a decrease in optical transmission.

To inhibit such a decrease in optical transmission caused by the sort of light scattering at their interfaces, it is effective to increase the refractive index of the PSA layer so as to decrease the differences in refractive index among them. In general, as a method for increasing the refractive index of a resin, a technique is known, in which a substance having a bulky structure such as a benzene ring is included as a component of the resin. However, when such a highly refractive substance is included in PSA, the PSA's properties (e.g. adhesive strength) tend to degrade.

The present invention has been made in view of these circumstances with an objective to provide a PSA layer that has a high refractive index and a high adhesive strength. Another objective of this invention is to provide a PSA sheet having the PSA layer.

This invention provides a PSA layer that comprises a PSA obtainable by using a PSA composition comprising a base polymer. Here, the PSA layer has a refractive index of 1.54 or higher. The base polymer has a glass transition temperature of 5 °C or lower. According to such an embodiment, the resulting PSA layer is likely to have a high refractive index while having a high adhesive strength.

According to a preferable embodiment of the art disclosed herein, the base polymer is an acrylic polymer. The use of acrylic polymer as the base polymer is likely to result in a highly transparent PSA layer having greater adhesive strength.

According to another preferable embodiment of the art disclosed herein, the acrylic polymer is a polymer of monomers (a monomer mixture) that comprise both n-butyl acrylate and 2-ethylhexyl acrylate or one of the two, with their combined amount accounting for at least 20 % by weight of the total amount of the monomers. Such a monomer composition allows for easy control of the glass transition temperature of the acrylic polymer as the base polymer to have it in the favorable range, and the adhesive strength of the PSA layer comprising the base polymer is readily increased.

In addition to the PSA, additives such as an organic or inorganic filler may be added to the PSA layer to add various properties. For instance, to add thermal conductivity to the PSA layer, a thermally conductive filler such as a hydrated metal compound may be added. However, the addition of thermally conductive filler can cause clouding of the PSA layer due to the sort of light scattering at the interface between the PSA and the thermally conductive filler in the PSA layer, resulting in a decrease in transparency. If a PSA layer is obtained that stays highly transparent even with a thermally conductive filler content, it can serve to simultaneously provide heat dissipation, heat conduction and so on to the adherend in applications where transparency is required, such as optical applications.

According to another preferable embodiment of the art disclosed herein, the PSA layer further comprises a thermally conductive filler. With the thermally conductive filler content, the thermal conductivity of the PSA layer will increase. In an application where the PSA layer is directly applied to an adherend, the PSA layer in such an embodiment contributes to effective heat dissipation, heat conduction and so on of the adherend.

Thermally conductive fillers tend to have relatively high refractive indices as compared to PSA for general use in the field of PSA sheets and the large difference in refractive index between a thermally conductive filler and PSA in a PSA layer has been a cause of lower transparency. In this regard, because the PSA layer disclosed herein has a relatively high refractive index of 1.54 or higher, the difference in refractive index between the thermally conductive filler and the PSA in the PSA layer tends to be sufficiently small. Thus, according to such an embodiment, the influence of light scattering and the like is reduced at the interface between the PSA and the thermally conductive filler in the PSA layer and the transparency (optical transmission) of the PSA layer tends to increase. Accordingly, with the art disclosed herein, a PSA layer can be readily obtained that includes a thermally conductive filler, yet still has high transparency. Furthermore, according to the art disclosed herein, a highly adhesive PSA layer is readily obtained. Thus, according to

such an embodiment, a highly transparent and highly adhesive PSA layer is readily obtained even if the thermally conductive filler is included in an amount sufficient for bringing about sufficiently high thermal conductivity.

The PSA layer according to another preferable embodiment disclosed herein comprises a hydrated metal compound as the thermally conductive filler. Such a thermally conductive filler has excellent thermal conductivity and its refractive index is in a relatively close vicinity of that of the PSA in the PSA layer. Thus, according to the embodiment comprising a hydrated metal compound as the thermally conductive filler, a highly transparent PSA layer is readily obtained even if the thermally conductive filler is included in an amount sufficient for bringing about sufficiently high thermal conductivity.

In the PSA layer according to another preferable embodiment disclosed herein, the difference in refractive index between the PSA layer and the thermally conductive filler is within $\pm 0.04$. When the difference in refractive index between the PSA layer and the thermally conductive filler is within the prescribed range, the difference in refractive index between the PSA and the thermally conductive filler in the PSA layer is likely to be in a favorable range. Thus, according to such an embodiment, the resulting PSA layer is likely to have more favorably increased transparency.

The art disclosed herein provides a PSA sheet having a PSA layer disclosed herein. The PSA layer disclosed herein is likely to exhibit excellent adhesive strength while having a high refractive index. Thus, when the adherend is formed of a material having a relatively high refractive index such as optical materials, according to the PSA sheet having such a PSA layer, the difference in refractive index between the PSA layer and the adherend is minimized and the decrease in transparency at the interface between the PSA layer and the adherend is likely to be reduced in an application where the PSA layer is directly applied to the adherend.

When the PSA layer includes a thermally conductive filler, the PSA layer disclosed herein is likely to have improved transparency and high adhesive strength. The PSA sheet including such a PSA layer is likely to be highly transparent and highly adhesive while allowing excellent heat dissipation, heat conduction, etc., of the adherend.

The PSA sheet according to a preferable embodiment disclosed herein is formed of a PSA layer disclosed herein. In other words, the PSA sheet according to such an embodiment is a substrate-free PSA sheet consisting of the PSA layer. The PSA sheet in such an embodiment is not influenced by the optical properties of a substrate as compared to a substrate-containing PSA sheet; and therefore, it may allow more effective display of the optical properties of the PSA layer according to this invention.

Fig. 1 shows a cross section schematically illustrating the constitution of the PSA sheet according to an embodiment.
Fig. 2 shows another cross section schematically illustrating the constitution of the PSA sheet according to an embodiment.
Fig. 3(a) shows a diagram outlining the front view of the thermal analysis instrument used for determining thermal resistance in Examples and Fig. 3(b) shows a diagram outlining the lateral view of the instrument shown in Fig. 3(a).

Preferable embodiments of the present invention are described below. Matters necessary to practice this invention other than those specifically referred to in this description can be understood by a person skilled in the art based on the disclosure about implementing the invention in this description and common technical knowledge at the time the application was filed. The present invention can be practiced based on the contents disclosed in this description and common technical knowledge in the subject field.

In the following drawings, components or units having the same functions may be described with the same symbols allocated and the redundant description may be omitted or simplified. The embodiments illustrated in the drawings are schematic in order to clearly describe the present invention and the drawings do not accurately represent the size or scale of products actually provided.

<Structural examples of PSA sheet>

The PSA sheet disclosed herein is formed with a PSA layer. The PSA sheet disclosed herein may be formed of the PSA layer. In other words, the PSA sheet disclosed herein can be a substrate-free PSA sheet having a first adhesive face formed with one surface of the PSA layer and a second adhesive face formed with the other surface of the PSA layer.

Fig. 1 schematically illustrates the structure of the PSA sheet according to an embodiment. PSA sheet 10 is formed as a substrate-free PSA sheet 10 formed of a PSA layer 12. PSA sheet 10 has a first adhesive face 12A formed with one surface of PSA layer 12 and a second adhesive face 12B formed with the other surface of PSA layer 12. When PSA sheet 10 is used, the first and second adhesive faces 12A and 12B are applied to different locations of other member(s). The locations to which the first and second adhesive faces 12A and 12B are applied can be the corresponding areas of different members or different areas of a single member. As shown in Fig. 1, PSA sheet 10 prior to use (i.e. before applied to the adherend) may be a component of a release-lined PSA sheet 100 in which the first adhesive face 12A and the second adhesive face 12B are protected with release liners 14 and 16 each having a release face at least

on the side facing PSA layer 12. As for release liner 14 and 16, for instance, it is preferable to use one having a release face on one side of a substrate sheet (a liner substrate) by providing the one side with a release layer formed of a release agent. Alternatively, release liner 16 can be eliminated; instead, release liner 14 having a release surface on each face can be layered with PSA sheet 10 and wound together to form a release-lined PSA sheet (in a roll) in which the second adhesive face 12B is in contact with and protected with the back side of release liner 14.

Alternatively, the PSA sheet disclosed herein can be a substrate-supported PSA sheet in which the PSA layer is laminated on one or each face of a support substrate. Hereinafter, the support substrate may be simply referred to as the "substrate."

Fig. 2 schematically illustrates the structure of the PSA sheet according to an embodiment. PSA sheet 20 is constituted as a substrate-supported PSA sheet (an adhesively double-faced PSA sheet) having a support substrate sheet (e.g. resin film) 22 having first and second faces 22A and 22B, a first PSA layer 24 fixed to the first face 22A side and a second PSA layer 26 fixed to the second face 22B side. As shown in Fig. 2, PSA sheet 20 prior to use may be a component of a release-lined PSA sheet 200 in which the surfaces (first and second adhesive faces) 24A and 26A of first and second PSA layers 24 and 26 are protected with release liners 28 and 29. Alternatively, omitting release liner 29, a release liner 28 having release faces on both sides may be used; this and PSA sheet 20 may be layered and wound together to form a roll of a release-lined PSA sheet in which the second adhesive face 26A is in contact and protected with the backside of release liner 28.

In PSA sheet 20 in such an embodiment, the material forming support substrate 22 is not particularly limited. From the standpoint of obtaining PSA sheet 20 with good optical transmission, a transparent resin film can be preferably used as support substrate 22. Non-limiting examples of the resin film include polyolefin films whose primary components are polyolefins such as polypropylene and ethylene-polypropylene copolymers; polyester films whose primary components are polyesters such as polyethylene terephthalate (PET) and polybutylene terephthalate; and polyvinyl chloride films whose primary components are polyvinyl chlorides. In a favorable example, from the standpoint of the transparency, PET film can be preferably used.

The concept of PSA sheet herein may encompass so-called PSA tapes, PSA films, PSA labels, etc. The PSA sheet can be in a roll or in a flat sheet or may be cut or punched out into a suitable shape according to the purpose and application. In the PSA sheet having a PSA layer on one or each face of a support substrate, the PSA layer is typically formed in a continuous form, but is not limited to this. For instance, it may be formed in a regular or random pattern of dots, stripes, etc.

<PSA layer>

The PSA sheet disclosed herein includes a PSA layer having a refractive index of 1.54 or higher (typically 1.540 or higher). According to the PSA layer a refractive index of at least the prescribed value, in an application where the adherend is an optical member having a relatively high refractive index as compared to PSA for general use, the sort of light scattering is likely to be lessened at the interface between the PSA layer and the optical member when the PSA layer is directly applied to the optical member. Thus, when such a PSA layer is used, it may be possible to reduce the decrease in optical transmittance caused by the sort of light scattering at the interface between the PSA layer and the optical member as the adherend.

The PSA layer's refractive index is not particularly limited as long as it is 1.54 or higher. It should be suitably selected in accordance with the refractive index of the adherend to which the PSA layer is applied or the refractive indices of possible additives such as fillers added to the PSA layer. For instance, the PSA layer's refractive index is preferably 1.541 or higher, more preferably 1.542 or higher, or yet more preferably 1.543 or higher (e.g. 1.545 or higher). In general, with increasing refractive index of the PSA layer, the adhesive properties (e.g. adhesive strength) of the PSA layer tend to degrade. Thus, it is significant to use the art disclosed herein to obtain a PSA layer that has at least a minimum refractive index described above while showing excellent adhesive strength.

In particular, in an embodiment where the PSA layer includes a thermally conductive filler as described later, from the standpoint of reducing the decrease in transparency due to the sort of light scattering at the interface between the thermally conductive filler and other component(s) (primarily the PSA) in the PSA layer, it is preferable that the difference in refractive index is small between the thermally conductive filler and the PSA in the PSA layer. As compared to PSA for general use in the field of PSA sheets, thermally conductive fillers tend to have high refractive indices. Thus, from the standpoint of increasing the transparency of the PSA layer itself, it is preferable to increase the refractive indices of the PSA and the PSA layer comprising the PSA.

From such a standpoint, particularly in an embodiment where the PSA layer includes a thermally conductive filler, it is preferable that the PSA layer has a refractive index of 1.542 or higher. When using aluminum hydroxide as the thermally conductive filler, the PSA layer's refractive index is preferably 1.545 or higher, more preferably 1.548 or higher, or yet more preferably 1.550 or higher. When using magnesium hydroxide as the thermally conductive filler, the PSA layer's refractive index is preferably 1.542 or higher, more preferably 1.545 or higher, or yet more preferably 1.547

or higher.

The maximum refractive index of the PSA layer is not particularly limited. From the standpoint of achieving a balance with other properties (e.g. adhesive strength), the PSA layer's refractive index is usually suitably 1.590 or lower. When the PSA layer includes a thermally conductive filler, from the standpoint of minimizing the difference in refractive index between the thermally conductive filler and the PSA in the PSA layer, the PSA layer's refractive index is preferably 1.585 or lower, or more preferably 1.580 or lower. When using aluminum hydroxide as the thermally conductive filler, the PSA layer's refractive index is preferably 1.575 or lower, more preferably 1.570 or lower, or yet more preferably 1.565 or lower. When using magnesium hydroxide as the thermally conductive filler, the PSA layer's refractive index is preferably 1.565 or lower, more preferably 1.560 or lower, or yet more preferably 1.555 or lower.

Herein, the PSA layer's refractive index can be determined, using a commercial Abbe refractometer (e.g. model DR-M2 available from ATAGO Co., Ltd.). More specifically, the PSA layer's refractive index can be determined by the method described later in Examples. The same is true with the thermally conductive filler's refractive index described later.

In the art disclosed herein, the PSA in the PSA layer is not particularly limited. As its base polymer (i.e. a component accounting for 50 % by weight or more of the polymers), the PSA may comprise, one, two or more species among various polymers, for instance, acrylic polymer, rubber-based polymer, polyester-based polymer, urethane-based polymer, polyether-based polymer, silicone-based polymer, polyamide-based polymer and fluoropolymers. The PSA layer in the art disclosed herein may be formed from a PSA composition comprising such a base polymer. The form of the PSA composition is not particularly limited. The PSA composition can be in various forms, for instance, water-dispersed, hot melt, and active energy ray-curable (e.g. photo curable) forms.

As used herein, the term "active energy ray" refers to an energy ray having energy capable of causing a chemical reaction such as polymerization, crosslinking, initiator decomposition, etc. Examples of the active energy ray herein include lights such as ultraviolet (UV) rays, visible light, infrared light, radioactive rays such as $\alpha$ rays, $\beta$ rays, $\gamma$ rays, electron beam, neutron radiation, and X rays.

(Base polymer)

In the art disclosed herein, the base polymer has a glass transition temperature (Tg) of 5 °C or lower. PSA comprising a base polymer with such a Tg is suited for forming a PSA layer having good contour conformability and tends to provide greater adhesive properties (adhesive strength, etc.). From such a standpoint, the base polymer's Tg is more preferably 3 °C or lower, or possibly below 0 °C. In some embodiments, the base polymer's Tg can be, for instance, below -3 °C, or even below -5 °C. The base polymer's minimum Tg is not particularly limited. From the standpoint of achieving a balance with the increase in refractive index of the PSA layer, it is typically favorable to use a base polymer having a Tg of -40 °C or higher. In some embodiments, the base polymer's Tg can be, for instance, -20 °C or higher, -15 °C or higher, or even -10 °C or higher.

Here, the Tg of the base polymer refers to a nominal value given in a reference book, catalog, etc., or a Tg value determined by the Fox equation based on the composition of monomers used for preparation of the base polymer. As shown below, the Fox equation is a relational expression between the Tg of a copolymer and glass transition temperatures Tgi of homopolymers obtainable by homopolymerization of the respective monomers constituting the copolymer.

$$1/Tg = \Sigma(Wi/Tgi)$$

In the Fox equation, Tg represents the glass transition temperature (unit: K) of the copolymer, Wi the weight fraction (copolymerization ratio by weight) of a monomer i in the copolymer, and Tgi the glass transition temperature (unit: K) of homopolymer of the monomer i. When the base polymer is a bomopolymer, the homopolymer's Tg equals to the base polymer's Tg.

As for the glass transition temperatures of homopolymers used for Tg determination, values listed in a known document are used. In particular, values are given in "Polymer Handbook" (3rd edition, John Wiley & Sons, Inc., Year 1989). With respect to a monomer for which several values are given in Polymer Handbook, the highest value is used. For glass transition temperatures of homopolymers whose corresponding monomers are not listed in Polymer Handbook, values obtained by the measurement method described in Japanese Patent Application Publication No. 2007-51271 can be used.

While no particular limitations are imposed, the weight average molecular weight (Mw) of the base polymer can be, for instance, about $5 \times 10^4$ or higher. With a base polymer having such a Mw, a PSA that shows good cohesion is likely to be obtained. In some embodiments, the base polymer's Mw can be, for instance, $10 \times 10^4$ or higher, $20 \times 10^4$ or higher, or even $30 \times 10^4$ or higher. The base polymer's Mw is usually suitably about $500 \times 10^4$ or lower. The

base polymer with such a Mw is suited for forming a PSA layer that conforms well to contours.

The Mw of the base polymer can be determined as a value based on standard polystyrene by gel permeation chromatography (GPC). The GPC analysis can be carried out, using, for instance, a GPC system HLC-8220GPC available from Tosoh Corporation under the conditions shown below.

[GPC Analysis]

Sample concentration: 0.2 % by weight (tetrahydrofuran (THF) solution)
Sample injection: 10 μL
Eluent: THF, flow rate: 0.6 mL/minute
Measurement temperature: 40 °C

Columns:

Sample columns; 1 TSK guardcolumn SuperHZ-H + 2 TSKgel SuperHZM-H colum ns
Reference column; 1 TSKgel SuperH-RC column
Detector: differential refractometer (RI)

In the art disclosed herein, the base polymer is preferably an acrylic polymer.

As used herein, the term "acrylic polymer" refers to a polymer having a monomeric unit derived from a (meth)acrylic monomer in the polymer structure and typically refers to a polymer containing over 50% by weight monomeric units derived from a (meth)acrylic monomer. The term "(meth)acrylic monomer" refers to a monomer having at least one (meth)acryloyl group in one molecule. In this context, it is intended that the term "(meth)acryloyl group" collectively refers to an acryloyl group and a methacryloyl group. Therefore, the concept of "(meth)acrylic monomer" as used herein may encompass both an acrylic monomer having an acryloyl group and a methacrylic monomer having a methacryloyl group. Similarly, it is intended that the term "(meth)acrylic acid" as used herein collectively refers to acrylic acid and methacrylic acid and the term "(meth)acrylate" collectively refers to an acrylate and a methacrylate.

In some embodiments, the acrylic polymer includes a monomeric unit derived from an alkyl (meth)acrylate. A preferable alkyl (meth)acrylate has a linear or branched alkyl group with 1 to 20 carbons (i.e. $C_{1-20}$). For easy balancing of properties, in some embodiments, the ratio of $C_{1-20}$ alkyl (meth)acrylate in the total amount of monomers can be, for instance, 10 % by weight or higher, 15 % by weight or higher, or even 20 % by weight or higher. For the same reason, of the total amount of monomers, the ratio of $C_{1-20}$ alkyl (meth)acrylate can be, for instance, 50 % by weight or less, 45 % by weight or less, or even 40 % by weight or less.

Non-limiting specific examples of the $C_{1-20}$ alkyl (meth)acrylate include methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, stearyl (meth)acrylate, isostearyl (meth)acrylate, nonadecyl (meth)acrylate, and eicosyl (meth)acrylate.

Among these, it is preferable to use at least a $C_{1-18}$ alkyl (meth)acrylate and it is more preferable to use at least a $C_{1-14}$ alkyl (meth)acrylate. In some embodiments, the acrylic polymer may include, as a monomeric unit, at least one species selected among $C_{4-12}$ alkyl (meth)acrylates (preferably $C_{4-10}$ alkyl acrylates). For example, the acrylic polymer preferably includes one or each of n-butyl acrylate (BA) and 2-ethylhexyl acrylate (2EHA). Examples of other $C_{1-18}$ alkyl (meth)acrylates that are preferably used include methyl acrylate, methyl methacrylate (MMA), n-butyl methacrylate (BMA), 2-ethylhexyl methacrylate (2EHMA), and isostearyl acrylate (ISTA).

In a preferable embodiment of the art disclosed herein, the combined amount of n-butyl acrylate (BA) and 2-ethylhexyl acrylate (2EHA) accounts for 15 % by weight or more of the total amount of the monomers. According to such an embodiment, the acrylic polymer is likely to have a glass transition temperature of 5 °C or lower; and the PSA layer comprising, as the base polymer, an acrylic polymer having such a relatively low glass transition temperature is likely to show greater contour-conformability and improved adhesive strength. From such a standpoint, the combined amount of BA and 2EHA is more preferably 20 % by weight or more of the total monomer content, or yet more preferably 23 % by weight or more thereof. In a preferable embodiment, the combined amount of BA and 2EHA can be 25 % by weight or more of the total monomer content, or even 28 % by weight or more thereof. From the standpoint of achieving a balance with other properties, the combined amount of BA and 2EHA in the total monomer content can be, for instance, 50 % by weight or less, 45 % by weight or less, or even 40 % by weight or less.

The monomers forming the acrylic polymer may include another monomer (or copolymerizable monomer, hereinafter) that is not an alkyl (meth)acrylate and is capable of copolymerizing with the alkyl (meth)acrylate. As the copolymerizable monomer, an acrylic monomer that is a high-refractive-index monomer can be suitably used. Such a

high-refractive-index monomer is likely to increase the refractive index of the polymer formed from a monomer mixture including the high-refractive-index monomer. As used herein, the term "high-refractive-index monomer" refers to a monomer whose homopolymer has a refractive index of about 1.50 or higher. High-refractive-index acrylic monomers include a (meth)acrylate having an aromatic ring, a sulfur-containing (meth)acrylate, and a halogenated (meth)acrylate. These can be used singly as one species or in a combination of two or more species. In particular, a (meth)acrylate having an aromatic ring can be preferably used.

Non-limiting examples of the aromatic ring-containing (meth)acrylate include benzyl (meth)acrylate, naphthyl (meth)acrylate, phenoxyethyl (meth)acrylate, phenoxybutyl (meth)acrylate, possibly ethoxylated phenylphenol (meth)acrylate, and fluorene-based (meth)acrylate. In particular, possibly ethoxylated phenylphenol (meth)acrylate and benzyl (meth)acrylate are preferable; and possibly ethoxylated phenylphenol acrylate (e.g. ethoxylated o-phenylphenol acrylate) and benzyl acrylate are more preferable.

Here, the fluorene-based (meth)acrylate is a compound (monomer) that has a fluorene backbone and a (meth)acryloyl group in the molecule, favorably a compound having a structure formed with a fluorene backbone to which a (meth)acryloyl group is bonded directly or via an oxyalkylene chain (monooxyalkylene chain or polyoxyalkylene chain). Among these fluorene-based (meth)acrylates, a so-called polyfunctional fluorene-based (meth)acrylate is preferable, with two or more (meth)acryloyl groups bonded (possibly via oxyalkylene chains) to the fluorene backbone. Specific examples of the fluorene-based (meth)acrylate include product names OGSOL EA-0200, EA-0500 and EA-1000 available from Osaka Gas Chemical Co., Ltd. In an embodiment of the art disclosed herein, from the standpoint of increasing the adhesive strength of the PSA layer, the fluorene-based (meth)acrylate may not be used.

Favorable examples of the sulfur-containing (meth)acrylate include 1,2-bis(meth)acryloylthioethane, 1,3-bis(meth)acryloylthiopropane, 1,4-bis(meth)acryloylthiobutane, 1,2-bis(meth)acryloylmethylthiobenzene, and 1,3-bis(meth)acryloylmethylthiobenzene.

Favorable examples of the halogenated (meth)acrylate include 6-(4,6-dibromo-2-isopropylphenoxy)-1-hexyl acrylate, 6-(4,6-dibromo-2-subutylphenoxy)-1-hexyl acrylate, 2,6-dibromo-4-nonylphenyl acrylate, and 2,6-dibromo-4-dodecylphenyl acrylate.

From the standpoint of allowing suitable adjustment of the base polymer's refractive index and further the PSA layer's refractive index, the ratio of high-refractive-index acrylic monomer in the total amount of the monomers of the base polymer is preferably 50 % by weight or higher. The high-refractive-index acrylic monomer content of the monomers is more preferably 55 % by weight or higher, or even possibly 60 % by weight or higher. In some embodiments, the ratio of the high-refractive-index acrylic monomer in the total amount of the monomers is preferably 70 % by weight or higher, or even possibly 80 % by weight or higher. As it facilitates achieving a balance with other properties such as adhesiveness, in some embodiments, the ratio of the high-refractive-index acrylic monomer in the total amount of the monomers can be 80 % by weight or lower, 75 % by weight or lower, 70 % by weight or lower, or even 65 % by weight or lower. When the monomers of the base polymer include two or more species of high-refractive-index acrylic monomers, the high-refractive-index acrylic monomer content of the monomers refers to the total amount of the two or more species of high-refractive-index acrylic monomers.

The monomers forming the acrylic polymer may include, as necessary, another monomer (or copolymerizable monomer, hereinafter) that is neither an alkyl (meth)acrylate nor a high-refractive-index monomer and is capable of copolymerizing with the alkyl (meth)acrylate or the high-refractive-index monomer. As the copolymerizable monomer, a monomer having a polar group (such as a carboxy group, a hydroxy group and an amide group) may be suitably used. The monomer having a polar group may be useful for introducing a cross-linking point into the acrylic polymer or increasing cohesive strength of the acrylic polymer. For the copolymerizable monomer, solely one species or a combination of two or more species can be used.

Non-limiting specific examples of the copolymerizable monomer include those indicated below.

Carboxyl group-containing monomers: for example, acrylic acid, methacrylic acid, carboxyethyl acrylate, carboxypentyl acrylate, itaconic acid, maleic acid, fumaric acid, crotonic acid and isocrotonic acid;

Acid anhydride group-containing monomers: for example, maleic anhydride and itaconic anhydride;

Hydroxy group-containing monomers: for example, hydroxyalkyl (meth)acrylates such as 2-hydroxyethyl (meth)acrylate, 2-hydroxypropyl (meth)acrylate, 2-hydroxybutyl (meth)acrylate, 3-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate and (4-hydroxymethylcyclohexyl)methyl (meth)acrylate;

Monomers having a sulphonate group or a phosphate group: for example, styrene sulphonic acid, allyl sulphonic acid, sodium vinylsulphonate, 2-(meth)acrylamide-2-methylpropane sulphonic acid, (meth)acrylamide propane sulphonic acid, sulphopropyl (meth)acrylate, (meth)acryloyloxy naphthalenesulphonic acid and 2-hydroxyethylacryloyl phosphate;

Epoxy group-containing monomers: for example, epoxy group-containing acrylates such as glycidyl (meth)acrylate and (meth)acrylate-2-ethyl glycidyl ether, allyl glycidyl ether and (meth)acrylate glycidyl ether;

Cyano group-containing monomers: for example, acrylonitrile and methacrylonitrile;

Isocyanato group-containing monomers: for example, 2-isocyanatoethyl (meth)acrylate;

Amido group-containing monomers: for example, (meth)acrylamide; N,N-dialkyl (meth)acrylamides such as N,N-dimethyl(meth)acrylamide, N,N-diethyl(meth)acrylamide, N,N-dipropyl(meth)acrylamide, N,N-diisopropyl(meth)acrylamide, N,N-di(n-butyl) (meth)acrylamide and N,N-di(t-butyl) (meth)acrylamide; N-alkyl (meth)acrylamides such as N-ethyl(meth)acrylamide, N-isopropyl(meth)acrylamide, N-butyl(meth)acrylamide and N-n-butyl(meth)acrylamide; N-vinylcarboxylic acid amides such as N-vinylacetamide; a monomer having a hydroxy group and an amide group, for example, an N-hydroxyalkyl(meth)acrylamide such as N-(2-hydroxyethyl)(meth)acrylamide, N-(2-hydroxypropy])(meth)acrylamide, N-(1-hydroxypropyl)(meth)acrylamide, N-(3-hydroxypropyl)(meth)acrylamide, N-(2-hydroxybutyl)(meth)acrylamide, N-(3-hydroxybutyl)(meth)acrylamide, and N-(4-hydroxybutyl)(meth)acrylamide; a monomer having an alkoxy group and an amide group, for example, an N-alkoxyalkyl(meth)acrylamide such as N-methoxymethyl(meth)acrylamide, N-methoxyethyl(meth)acrylamide, and N-butoxymethyl(meth)acrylamide; and N,N-dimethylaminopropyl(meth)acrylamide, N-(meth)acryloylmorpholine, etc.

Monomers having a nitrogen atom-containing ring: for example, N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-(meth)acryloyl-2-pyrrolidone, N-(meth)acryloylpiperidine, N-(meth)acryloylpyrrolidine, N-vinylmorpholine, N-vinyl-3-morpholinone, N-vinyl-2-caprolactam, N-vinyl-1,3-oxazin-2-one, N-vinyl-3,5-morpholinedione, N-vinylpyrazole, N-vinylisoxazole, N-vinylthiazole, N-vinylisothiazole and N-vinylpyridazine (such as lactams including N-vinyl-2-caprolactam);

Monomers having a succinimide skeleton: for example, N-(meth)acryloyloxy methylene succinimide, N-(meth)acryloyl-6-oxy hexamethylene succinimide and N-(meth)acryloyl-8-oxy hexamethylene succinimide;

Maleimides: for example, N-cyclohexylmaleimide, N-isopropylmaleimide, N-laurylmaleimide and N-phenylmaleimide;

Itaconimides: for example, N-methyl itaconimide, N-ethyl itaconimide, N-butyl itaconimide, N-octyl itaconimide, N-2-ethylhexyl itaconimide, N-cyclohexyl itaconimide and N-lauryl itaconimide;

Aminoalkyl (meth)acrylates: for example, aminoethyl (meth)acrylate, N,N-dimethylaminoethyl (meth)acrylate, N,N-diethylaminoethyl (meth)acrylate and t-butylaminoethyl (meth)acrylate;

Alkoxy group-containing monomers: for example, an alkoxyalkyl (meth)acrylate such as 2-methoxyethyl (meth)acrylate, 3-methoxypropyl (meth)acrylate, 2-ethoxyethyl (meth)acrylate, propoxyethyl (meth)acrylate, butoxyethyl (meth)acrylate and ethoxypropyl (meth)acrylate; and an alkoxy alkylene glycol (meth)acrylate such as methoxy ethylene glycol (meth)acrylate, methoxy propylene glycol (meth)acrylate, methoxy poly(ethylene glycol) (meth)acrylate and methoxy poly(propylene glycol) (meth)acrylate;

Vinyl esters: for example, vinyl acetate and vinyl propionate;

Vinyl ethers: for example, vinyl alkyl ethers such as methyl vinyl ether and ethyl vinyl ether;

Aromatic vinyl compounds: for example, styrene, $\alpha$-methylstyrene and vinyl toluene;

Olefins: for example, ethylene, butadiene, isoprene and isobutylene;

(Meth)acrylic esters having an alicyclic hydrocarbon group: for example, cyclopentyl (meth)acrylate, cyclohexyl (meth)acrylate, isobornyl (meth)acrylate and dicyclopentanyl (meth)acrylate;

(Meth)acrylic esters having an aromatic hydrocarbon group: for example, phenyl (meth)acrylate, phenoxyethyl (meth)acrylate and benzyl (meth)acrylate;

Heterocyclic ring-containing (meth)acrylates such as tetrahydrofurfuryl (meth)acrylate, halogen atom-containing monomers such as vinyl chloride and halogen atom-containing (meth)acrylates (for example, fluorine atom-containing (meth)acrylates), silicon atom-containing (meth)acrylates such as silicone (meth)acrylate, (meth)acrylic esters obtained from terpene compound derivative alcohols, and the like.

Copolymerizable monomers that can be preferably used in some embodiments include at least one monomer selected from the group consisting of an N-vinyl cyclic amide represented by the following general formula (M1) and a hydroxy group-containing monomer (possibly a monomer having a hydroxy group and other functional group, e.g. a monomer having a hydroxy group and an amide group).

[Chem 1]

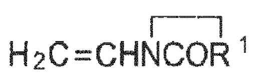

(M1)

Here, $R^1$ in the general formula (M1) is a divalent organic group.

Specific examples of the N-vinyl cyclic amide include N-vinyl-2-pyrrolidone, N-vinyl-2-piperidone, N-vinyl-3-morpholinone, N-vinyl-2-caprolactam, N-vinyl-1,3-oxazin-2-one, and N-vinyl-3,5-morpholinedione. N-vinyl-2-pyrrolidone and N-vinyl-2-caprolactam are particularly preferable.

Specific examples of hydroxy group-containing monomers that can be favorably used include 2-hydroxyethyl (meth)acrylate, 4-hydroxybutyl (meth)acrylate, 6-hydroxyhexyl (meth)acrylate and N-(2-hydroxyethyl)(meth)acrylamide.

Among others, preferable examples include 2-hydroxyethyl acrylate (HEA), 4-hydroxybutyl acrylate (4HBA), and N-(2-hydroxyethyl)acrylamide (HEAA).

When using a copolymerizable monomer as described above, its amount used is not particularly limited, but it is usually suitably at least 0.01 % by weight of the total amount of monomers. From the standpoint of obtaining greater effect of the use of the copolymerizable monomer, the amount of copolymerizable monomer used can be 0.1 % by weight or more of the total amount of monomers, or even 1 % by weight or more. The amount of copolymerizable monomer used can be 50 % by weight or less of the total amount of monomers, or preferably 40 % by weight or less. This can bring about greater contour-conformability.

The method for obtaining the acrylic polymer is not particularly limited. Various polymerization methods known as synthetic methods of acrylic polymers may be appropriately employed such as solution polymerization, emulsion polymerization, bulk polymerization, suspension polymerization and photopolymerization. In some embodiments, solution polymerization or photopolymerization may be preferably employed.

The initiator used for polymerization may be appropriately selected according to the polymerization method from heretofore known thermal polymerization initiators, photopolymerization initiators and the like. For the polymerization initiator, solely one species or a combination of two or more species can be used. Examples of the thermal polymerization initiator include azo polymerization initiators, persulfates, peroxide polymerization initiators and redox polymerization initiators. The amount of thermal polymerization initiator used is not particularly limited, and may be, for example, in the range of 0.01 part by weight to 5 parts by weight and preferably 0.05 part by weight to 3 parts by weight relative to 100 parts by weight of monomers used for preparing the acrylic polymer.

The photopolymerization initiator is not particularly limited and examples thereof that may be used include benzoin ether photopolymerization initiators, acetophenone photopolymerization initiators, $\alpha$-ketol photopolymerization initiators, aromatic sulphonyl chloride photopolymerization initiators, photoactive oxime photopolymerization initiators, benzoin photopolymerization initiators, benzyl photopolymerization initiators, benzophenone photopolymerization initiators, ketal photopolymerization initiators, thioxanthone photopolymerization initiators, acylphosphine oxide photopolymerization initiators and the like. The amount of photopolymerization initiator used is not particularly limited, and may be, for example, in the range of 0.01 part by weight to 5 parts by weight and preferably 0.05 part by weight to 3 parts by weight relative to 100 parts by weight of monomers used for preparing the acrylic polymer.

In some embodiments, the PSA composition for forming PSA layer may include the acrylic polymer as a partial polymer (acrylic polymer syrup) obtainable by subjecting a mixture of monomers with a polymerization initiator to UV irradiation to polymerize part of the monomers. The PSA composition containing such acrylic polymer syrup is applied to a certain substrate and irradiated with UV to complete the polymerization. In other words, the acrylic polymer syrup can be thought as a precursor of the acrylic polymer. The PSA layer disclosed herein can be formed, using, for instance, a PSA composition that includes the acrylic polymer as the base polymer in the acrylic polymer syrup form and includes, as necessary, a suitable amount of a polyfunctional monomer described later.

The refractive index of the base polymer is not particularly limited. From the standpoint of increasing the refractive index of the PSA layer, it is preferable to use a base polymer having a high refractive index. From such a standpoint, the base polymer's refractive index is preferably 1.540 or higher, more preferably 1.541 or higher, yet more preferably 1.542 or higher, or particularly preferably 1.543 or higher (e.g. 1.545 or higher). In an embodiment where the PSA layer includes a thermally conductive filler in addition to the base polymer, the base polymer's refractive index is preferably 1.542 or higher. When using aluminum hydroxide as the thermally conductive filler, the base polymer's refractive index is preferably 1.545 or higher, more preferably 1.548 or higher, or yet more preferably 1.550 or higher. When using magnesium hydroxide as the thermally conductive filler, the base polymer's refractive index is preferably 1.542 or higher, more preferably 1.545 or higher, or yet more preferably 1.547 or higher. When a base polymer having such a refractive index is used, the difference in refractive index between the base polymer and the thermally conductive filler is likely to be small and a highly transparent PSA layer is likely to be obtained.

The maximum refractive index of the base polymer is not particularly limited. From the standpoint of achieving a balance with other properties (e.g. adhesive strength), the base polymer's refractive index is usually suitably 1.590 or lower. When the PSA layer includes a thermally conductive filler in addition to the base polymer, from the standpoint of minimizing the difference in refractive index between the base polymer and the thermally conductive filler, the base polymer's refractive index is preferably 1.585 or lower, or more preferably 1.580 or lower. When using aluminum hydroxide as the thermally conductive filler, the base polymer's refractive index is preferably 1.575 or lower, more preferably 1.570 or lower, or yet more preferably 1.565 or lower. When using magnesium hydroxide as the thermally conductive filler, the base polymer's refractive index is preferably 1.565 or lower, more preferably 1.560 or lower, or yet more preferably 1.555 or lower.

(Crosslinking agent)

In the PSA layer, for purposes such as adjusting the cohesive strength, a crosslinking agent may be used as

necessary. As the crosslinking agent, a crosslinking agent known in the field of PSA can be used, with examples including epoxy-based crosslinking agents, isocyanate-based crosslinking agent, silicone-based crosslinking agent, oxazoline-based crosslinking agent, aziridine-based crosslinking agent, silane-based crosslinking agent, alkyl-etherified melamine-based crosslinking agent and metal chelate-based crosslinking agents. In particular, isocyanate-based crosslinking agents, epoxy-based crosslinking agents and metal chelate-based crosslinking agents can be favorably used. For the crosslinking agent, solely one species or a combination of two or more species can be used.

When using a crosslinking agent, its amount used is not particularly limited. For instance, its amount can be greater than 0 part by weight relative to 100 parts b y weight of base polymer. The amount of crosslinking agent used to 100 parts by weight of base polymer can be, for instance, 0.01 part by weight or greater, or preferably 0.05 part by weight or greater. With increasing amount of crosslinking agent used, greater cohesive strength tends to be obtained. In some embodiments, the amount of crosslinking agent used to 100 parts by weight of base polymer can be 0.1 part by weight or greater, 0.5 part by weight or greater, or even 1 part by weight or greater. On the other hand, from the standpoint of avoiding degradation of contour-conformability caused by an excessive increase in cohesive strength, the amount of crosslinking agent used to 100 parts by weight of base polymer is usually suitably 15 parts by weight or less, 10 parts by weight or less, or even 5 parts by weight or less. The art disclosed herein can also be favorably implemented in an embodiment using no crosslinking agent.

To allow an aforementioned crosslinking reaction to proceed effectively, a crosslinking catalyst may be used. As the crosslinking catalyst, for instance, a tin-based catalyst (especially, dioctyltin dilaurate) can be preferably used. The amount of crosslinking catalyst used is not particularly limited. For instance, it can be about 0.0001 part to 1 part by weight to 100 parts by weight of base polymer.

In the PSA layer, a polyfunctional monomer may be used as necessary. The polyfunctional monomer used in place of or in combination with a crosslinking agent as described above may be helpful for purposes such as adjusting the cohesive strength. For instance, in the PSA layer formed from a photo-curable PSA composition, a polyfunctional monomer can be preferably used.

Examples of the polyfunctional monomer include ethylene glycol di(meth)acrylate, propylene glycol di(meth)acrylate, polyethylene glycol di(meth)acrylate, polypropylene glycol di(meth)acrylate, neopentyl glycol di(meth)acrylate, pentaerythritol di(meth)acrylate, pentaerythritol tri(meth)acrylate, dipentaerythritol hexa(meth)acrylate, ethyleneglycol di(meth)acrylate, 1,6-hexanediol di(meth)acrylate, 1,12-dodecanediol di(meth)acrylate, trimethylolpropane tri(meth)acrylate, tetramethylolmethane tri(meth)acrylate, allyl (meth)acrylate, vinyl (meth)acrylate, divinylbenzene, epoxy acrylate, polyester acrylate, urethane acrylate, butyldiol (meth)acrylate and hexyldiol di(meth)acrylate. Among them, trimethylolpropane tri(meth)acrylate, 1,6-hexanediol di(meth)acrylate and dipentaerythritol hexa(meth)acrylate can be favorably used. For the polyfunctional monomer, solely one species or a combination of two or more species can be used.

The amount of polyfunctional monomer used depends on its molecular weight, the number of functional groups therein, etc.; it is usually suitably in a range of about 0.01 part to 3 parts by weight to 100 parts by weight of base polymer. In some embodiments, the amount of polyfunctional monomer used to 100 parts by weight of base polymer can be, for instance, 0.02 part by weight or greater, or even 0.03 part by weight or greater. With increasing amount of polyfunctional monomer used, a higher cohesive strength tends to be obtained. On the other hand, from the standpoint of avoiding degradation of contour-conformability caused by an excessive increase in cohesive strength, the amount of polyfunctional monomer used to 100 parts by weight of base polymer can be 2.0 parts by weight or less, 1.0 part by weight or less, or even 0.5 part by weight or less.

(Tackifier resin)

The PSA layer may include a tackifier resin as necessary. The tackifier resin is not particularly limited. Examples include a rosin-based tackifier resin, a terpene-based tackifier resin, a phenol-based tackifier resin, a hydrocarbon-based tackifier resin, a ketone-based tackifier resin, a polyamide-based tackifier resin, an epoxy-based tackifier resin, and an elastomer-based tackifier resin. For the tackifier resin, solely one species or a combination of two or more species can be used.

A preferable tackifier resin has a softening point (softening temperature) of about 80 °C or higher (preferably about 100 °C or higher, e.g. about 120 °C or higher). The maximum softening point is not particularly limited; it can be, for instance, about 200 °C or lower (typically 180 °C or lower). The softening point of a tackifier resin can be determined based on the softening point test method (ring and ball method) specified in JIS K 2207.

When using a tackifier resin, its amount included is not particularly limited and can be selected so that suitable adhesive properties are obtained in accordance with the purpose and application. The tackifier resin content (when two or more species of tackifier resins are included, their combined amount) to 100 parts by weight of base polymer can be, for instance, 5 parts by weight or greater, or even 10 parts by weight or greater. On the other hand, from the standpoint of enhancing the contour-conformability, in some embodiments, the tackifier resin content to 100 parts by weight of base polymer is suitably 100 parts by weight or less; it can be 50 parts by weight or less, or even 25 parts by weight or less.

Alternatively, a tackifier resin may not be used.

(Filler)

In a preferable embodiment of the art disclosed herein, the PSA layer includes a filler. The filler is not particularly limited. For instance, a particulate or fibrous filler can be used. For the filler, solely one species or a combination of two or more species can be used.

The material forming the filler can be an inorganic material, with examples including metals such as copper, silver, gold, platinum, nickel, aluminum, chromium, iron, and stainless steel; metal oxides such as aluminum oxide, silicon oxides (typically silicon dioxide), titanium oxide, zirconium oxide, zinc oxide, tin oxide, antimonic acid-doped tin oxide, copper oxide, and nickel oxide; hydrated metal compounds such as aluminum hydroxide [$Al_2O_3 \cdot 3H_2O$ or $Al(OH)_3$], boehmite [$Al_2O_3 \cdot H_2O$ or AlOOH], magnesium hydroxide [$MgO \cdot H_2O$ or $Mg(OH)_2$], calcium hydroxide [$CaO \cdot H_2O$ or $Ca(OH)_2$], zinc hydroxide [$Zn(OH)_2$], silica [$H_4SiO_4$ or $H_2SiO_3$ or $H_2Si_2O_5$], iron hydroxide [$Fe_2O3 \cdot H_2O$ or 2FeO(OH)], copper hydroxide [$Cu(OH)_2$], barium hydroxide [$BaO \cdot H_2O$ or $BaO \cdot 9H_2O$], hydrated zirconium oxide [$ZrO \cdot nH_2O$], hydrated tin oxide [$SnO \cdot H_2O$], basic magnesium carbonate [$3MgCO_3 \cdot Mg(OH)_2 \cdot 3H_2O$], hydrotalcite [$6MgO \cdot Al_2O_3 \cdot H_2O$]dawsonite [$Na_2CO_3 \cdot Al_2O_3 \cdot nH_2O$], borax [$Na_2O \cdot B_2O_5 \cdot 5H_2O$] and zinc borate [$2ZnO \cdot 3B_2O_5 \cdot 3.5H_2O$]; carbides such as silicon carbide, boron carbide, nitrogen carbide, and calcium carbide; nitrides such as aluminum nitride, silicon nitride, boron nitride, and gallium nitride; carbonates such as calcium carbonate; titanates including barium titanate and potassium titanate; carbon-based substances including carbon black, carbon tubes (typically carbon nanotubes), carbon fibers, and diamond; and glass; and polymers such as polystyrene, acrylic resin (e.g. polymethyl methacrylate), phenol resin, benzoguanamine resin, urea resin, silicone resin, polyester, polyurethane, polyethylene, polypropylene, polyamide (e.g. nylon, etc.), polyimide, and polyvinylidene chloride. Alternatively, particulate natural raw materials can also be used, such as volcanic shirasu (ash), clay and sand. As the fibrous filler, various synthetic fibers and natural fibers can be used.

A particulate filler is preferably used because it is less likely to impair the smoothness of the PSA layer surface even if it is included in the PSA layer in a relatively large amount. The particle shape is not particularly limited; it may have a bulky shape, a needle-like shape, a flaky shape, or a layered shape. Examples of the bulky shape include a globular shape, a cuboid shape, a granular shape and deformed shapes of these. The particle structure is not particularly limited. For instance, it may have a compact structure, a porous structure, a hollow structure, etc.

When using a photocurable (e.g. UV curable) PSA composition, from the standpoint of the photo curing ability (polymerization reactivity) of the PSA composition, it is preferable to use a filler formed of an inorganic material.

In the art disclosed herein, the PSA layer preferably includes a thermally conductive filler. As the thermally conductive filler, a filler formed from an inorganic material can be preferably used. Favorable examples of the thermally conductive filler include fillers having dense structures formed from hydrated metal compounds, metal oxides, metals, etc. A PSA layer containing a thermally conductive filler tends to have greater thermal conductivity.

In some embodiments, a filler formed from a hydrated metal compound can be preferably used. The hydrated metal compounds generally start to decompose at temperatures between 150 °C and 500 °C; they are compounds represented by the general formula $MxOy \cdot nH_2O$ (M is a metal atom, x and y are integers of 1 or greater determined by the valence of the metal, and n is the number of waters of hydration) or double salts containing these compounds. Favorable examples of the hydrated metal compound include aluminum hydroxide and magnesium hydroxide.

Hydrated metal compounds are commercially available. Examples of commercially available aluminum hydroxides include product names HIGILITE H-100-ME (mean primary particle diameter: 75 μm), HIGILITE H-10 (mean primary particle diameter: 55 μm), HIGILITE H-32 (mean primary particle diameter: 8 μm), HIGILITE H-31 (mean primary particle diameter: 20 μm) and HIGILITE H-42 (mean primary particle diameter: 1 μm) (all available from Showa Denko K.K.); and product name B103ST (mean primary particle diameter: 7 μm) (available from Nippon Light Metal Co., Ltd.). Examples of commercially available magnesium hydroxide include product name KISUMA 5A (mean primary particle diameter: 1μm) (available from Kyowa Chemical Industry Co., Ltd.).

Examples of commercially available thermally conductive fillers other than hydrated metal compounds include boron nitride under product names HP-40 (available from Mizushima Ferroalloy Co., Ltd.) and PT620 (available from Momentive Performance Materials Inc.); aluminum oxide under product names AS-50 and AS-10 (available from Showa Denko K.K.); antimonic acid-doped tin under product names SN-100S, SN-100P and SN-100D (an aqueous dispersion) (all available from Ishihara Sangyo Kaisha, Ltd.); titanium oxide products under the TTO series (available from Ishihara Sangyo Kaisha, Ltd.); and zinc oxide under product names ZnO-310, ZnO-350 and ZnO-410 (available from Sumitomo Osaka Cement Co., Ltd.).

In a preferable embodiment of the art disclosed herein, the difference between the refractive index of the thermally conductive filler in the PSA layer and the refractive index of the PSA layer is within ±0.04. According to an embodiment having a PSA layer that has only a small difference in refractive index from the thermally conductive filler, a PSA layer with high optical transmission is likely to be obtained.

It does not matter which is greater between the PSA layer's refractive index and the thermally conductive filler's

refractive index. In other words, the value obtained by subtracting the PSA layer's refractive index from the thermally conductive filler's refractive index is preferably between -0.04 and 0.04. In some embodiments, the value obtained by subtracting the PSA layer's refractive index from the thermally conductive filler's refractive index is preferably between -0.02 and 0.04, possibly between 0 and 0.03, between 0 and 0.02, or even between 0 and 0.015. When the value obtained by subtracting the PSA layer's refractive index from the thermally conductive filler's refractive index is in these ranges, a highly transparent PSA sheet is likely to be obtained.

The thermally conductive filler's refractive index is not particularly limited. In some embodiments, the thermally conductive filler's refractive index is preferably 1.70 or lower, more preferably 1.65 or lower, or yet more preferably 1.60 or lower. The minimum refractive index of the thermally conductive filler is not particularly limited. It is usually 1.45 or higher, preferably 1.50 or higher, or yet more preferably 1.55 or higher.

The thermally conductive filler content in the PSA layer is not particularly limited. It can be selected in accordance with the thermal conductivity desired for the PSA sheet, etc. The thermally conductive filler content relative to 100 parts by weight of the base polymer can be 5 parts by weight or greater, 10 parts by weight or greater, or even 33 parts by weight or greater. To 100 parts by weight of the base polymer, the thermally conductive filler content is preferably 50 parts by weight or greater, more preferably 66 parts by weight or greater, or yet more preferably 100 parts by weight or greater. With increasing thermally conductive filler content, the PSA layer tends to show greater thermal conduction. In some embodiments, the thermally conductive filler content can be 120 parts by weight or greater, 150 parts by weight or greater, or even 185 parts by weight or greater, relative to 100 parts by weight of the base polymer. From the standpoint of minimize reduction of optical transmission of the PSA layer or from the standpoint of preventing the PSA layer from having a less smooth surface so as to readily obtain a good state of tight contact with a component (e.g. an adherend), the thermally conductive filler content relative to 100 parts by weight of the base polymer is suitably 900 parts by weight or less, preferably 400 parts by weight or less, more preferably 300 parts by weight or less, possibly 250 parts by weight or less, or even 200 parts by weight or less.

The mean particle diameter of the thermally conductive filler is not particularly limited. The mean particle diameter is usually suitably 100 μm or less, preferably 50 μm or less, or possibly even 20 μm or less. With decreasing mean particle diameter, the surface of the PSA layer tends to be smoother, leading to tighter adhesion to a component (e.g. adherend). In some embodiments, the thermally conductive filler may have a mean particle diameter of 10 μm or less, 5 μm or less, or even 3 μm or less. The filler's mean particle diameter can be, for instance, 0.1 μm or greater, 0.2 μm or greater, or even 0.5 μm or greater. It can be advantageous to have not too small a mean particle diameter from the standpoint of the ease of handling and dispersing the thermally conductive filler.

In some embodiments, relative to the thickness Ta of the PSA layer, the thermally conductive filler's mean particle diameter is preferably less than 0.5Ta. Here, in this description, unless otherwise informed, the thermally conductive filler's mean particle diameter refers to the 50th-percentile particle diameter (median diameter) corresponding to 50 % cumulative weight in a given size distribution obtained by a screening analysis. When the thermally conductive filler's mean particle diameter is less than 50 % of the PSA layer's thickness Ta, it can be said that 50 % by weight or more of the thermally conductive filler in the PSA layer have particle diameters smaller than the PSA layer's thickness Ta. When 50 % by weight or more of the thermally conductive filler in the PSA layer have particle diameters smaller than the PSA layer's thickness Ta, there is a higher tendency for the adhesive face to maintain good surface conditions (e.g. smoothness). This is preferable from the standpoint of obtaining tighter adhesion to the adherend to increase the thermal conductivity.

The PSA sheet disclosed herein can be preferably made in an embodiment where, in the particle distribution obtained by the scanning analysis, 60 % by weight or more of the thermally conductive filler in the PSA layer have particle diameters smaller than the PSA layer's thickness Ta (more preferably than 0.7Ta, or yet more preferably than 0.5Ta). Of the thermally conductive filler, the ratio of particles having particle diameters smaller than the PSA layer's thickness Ta (more preferably than 0.7Ta, or yet more preferably than 0.5Ta) can be, for instance, 70 % by weight or more, 80 % by weight or more, or even 90 % by weight or more. It is more preferable that substantially all of the thermally conductive filler in the PSA layer have particle diameters smaller than the PSA layer's thickness Ta (more preferably than 0.7Ta, or yet more preferably than 0.5Ta). Here, "substantially all" typically means 99 % by weight or more and 100 % by weight or less, for instance, 99.5 % by weight or more and 100 % by weight or less.

When the PSA layer disclosed herein includes a thermally conductive filler, the thermal conductivity of the PSA layer is not particularly limited. It is preferably 0.15 W/m·K or greater. When placed between components for which heat dissipation or heat conduction is desired, with increasing thermal conductivity, it is more likely to be favorably used for purposes such as heat dissipation and heat conduction of the components. The thermal conductivity is preferably 0.2 W/m ·K or greater, more preferably 0.25 W/m·K or greater, or yet more preferably 0.28 W/m -K or greater; for instance, it can be 0.3 W/m·K or greater, 0.31 W/m·K or greater, or even 0.32 W/m·K or greater. The maximum thermal conductivity of the PSA layer is not particularly limited. In some embodiments, in view of the balance with other properties such as transparency, the thermal conductivity of the PSA layer can be, for instance, 2.0 W/m·K or less, 1.5 W/m·K or less, 1.0 W/m·K or less, 0.8 W/m·K or less, 0.5 W/m·K or less, or even less than 0.5 W/m·K. In some embodiments, the thermal

conductivity of the PSA layer can be 0.45 W/m·K or less, 0.40 W/m·K or less, or even 0.35 W/m·K or less.

As used herein, the thermal conductivity of the PSA layer or PSA sheet refers to the value determined by a stationary heat flow method. More specifically, the thermal conductivity of the PSA layer or PSA sheet can be determined by the method described later in Examples.

(Dispersing agent)

The PSA composition for forming PSA layers may comprise, as necessary, a dispersing agent to well disperse the filler in the PSA composition. The PSA composition with a well dispersed thermally conductive filler can form a PSA layer with more uniform thermal conductivity.

As the dispersing agent, a known surfactant can be used. The surfactant encompasses nonionic, anionic, cationic and amphoteric surfactants. For the dispersing agent, solely one species or a combination of two or more species can be used.

One example of preferable dispersing agent is a phosphoric acid ester. For instance, a monoester, diester, triester of phosphoric acid, a mixture of these and the like can be used. Specific examples of the phosphoric acid ester include phosphoric acid monoesters of polyoxyethylene alkyl ether, polyoxyethylene alkyl aryl ether or polyoxyethylene aryl ether, the corresponding phosphoric acid diesters, the corresponding phosphoric acid triesters, and derivatives of these. Favorable examples include phosphoric acid monoesters of polyoxyethylene alkyl ether or polyoxyethylene alkyl aryl ether, and phosphoric acid diesters of polyoxyethylene alkyl ether or polyoxyethylene alkyl aryl ether. The number of carbon atoms of the alkyl group in such a phosphoric acid ester is, for instance, 6 to 20, preferably 8 to 20, or more preferably 10 to 18, typically 12 to 16.

As the phosphoric acid ester, a commercially available product can be used. Examples include trade names PLYSURF A212E, PLYSURF A210G, PLYSURF A212C and PLYSURF A215C available from DKS Co., Ltd., and trade names PHOSPHANOL RE610, PHOSPHANOL RS710 and PHOSPHANOL RS610 available from TOHO Chemical Industry Co., Ltd.

The amount of dispersing agent used to 100 parts by weight of filler can be, for instance, 0.01 part to 25 parts by weight; it is usually suitably 0.1 part to 25 parts by weight. From the standpoint of preventing troubled application of the PSA composition and roughening of the surface caused by poor dispersion of the filler, the amount of dispersing agent used to 100 parts by weight of filler is preferably 0.5 part by weight or greater, more preferably 1 part by weight or greater, yet more preferably 2 parts by weight or greater, or even 5 parts by weight or greater. From the standpoint of avoiding deterioration of properties such as adhesiveness caused by an excessive use of dispersing agent, the amount of dispersing agent used to 100 parts by weight of filler is preferably 20 parts by weight or less, more preferably 15 parts by weight or less, possibly 12 parts by weight or less, or even 10 parts by weight or less.

Relative to 100 parts by weight of the thermally conductive filler, the dispersing agent can be used in an amount of, for instance, 0.01 part to 25 parts by weight, or usually suitably 0.1 part to 25 parts by weight. From the standpoint of preventing hindrance to the application of the PSA composition and deterioration of surface smoothness caused by poor dispersion of the thermally conductive filler, the amount of the dispersing agent used to 100 parts by weight of the thermally conductive filler is preferably 0.15 part by weight or greater, more preferably 0.3 part by weight or greater, yet more preferably 0.5 part by weight or greater, or possibly 1 part by weight or greater. From the standpoint of avoiding degradation of properties such as the adhesive properties caused by excessive use of the dispersing agent, the amount of the dispersing agent used to 100 parts by weight of the thermally conductive filler is preferably 20 parts by weight or less, more preferably 15 parts by weight or less, possibly 12 parts by weight or less, or even 10 parts by weight or less.

Besides the above, as far as the effect of this invention is not significantly impaired, the PSA layer in the art disclosed herein may include, as necessary, known additives that can be used in PSA, such as leveling agent, plasticizer, softener, colorant (dye, pigment, etc.), antistatic agent, anti-aging agent, UV absorber, antioxidant, photo stabilizer, and preservative.

(Formation of PSA layer)

The PSA layer in the PSA sheet disclosed herein may be a cured layer of the PSA composition. In other words, it can be formed by providing (e.g. applying) the PSA composition to a suitable surface and then subjecting it to a suitable curing process. When two or more different curing processes (drying, crosslinking, polymerization, etc.) are carried out, these can be done at the same time or in stages. When a partial polymer (e.g. acrylic polymer syrup) of monomers are used for the PSA composition, a final copolymerization reaction is typically carried out as the curing process. That is, the partial polymer is subjected to a further copolymerization reaction to form a fully polymerized product. For instance, with respect to a photocurable PSA composition, photoirradiation is carried out. As necessary, curing processes such as crosslinking and drying can be performed. For instance, with respect to a photocurable PSA composition that needs to be dried, photocuring should be carried out after drying. With respect to a PSA composition using a fully polymerized

product, processes such as drying (drying with heat) and crosslinking are typically carried out as necessary as the curing process.

The PSA composition can be applied with, for example, a conventional coater such as a gravure roll coater, a reverse roll coater, a kiss-roll coater, a dip roll coater, a bar coater, a knife coater and a spray coater.

In the PSA sheet disclosed herein, the thickness of the PSA layer is not particularly limited. From the standpoint of increasing the thermal conduction and optical transmission, the thickness of the PSA layer is usually suitably 600 μm or less, preferably 300 μm or less, more preferably 100 μm or less, possibly less than 100 μm, 80 μm or less, 70 μm or less, 60 μm or less, or even 55 μm or less. From the standpoint of increasing the contour conformability (or contour-absorbing ability) of the PSA sheet, in some embodiments, the thickness of the PSA layer can be, for instance, 5 μm or greater, 10 μm or greater, 20 μm or greater, 30 μm or greater, or even 40 μm or greater.

In some embodiments, the PSA layer can be formed from a solvent-free PSA composition. Here, the term "solvent-free" indicates that the solvent content of the PSA composition is 5 % by weight or less, typically 1 % by weight or less. The solvent refers to a component that is not included in the final PSA layer. Thus, for instance, unreacted monomers and the like possibly present in acrylic polymer syrup are excluded from the concept of solvent. As the solvent-free PSA composition, for instance, a photo curable or hot-melt PSA composition can be used. In particular, a PSA layer formed from a photo curable (e.g. UV curable) PSA composition is preferable. Formation of the PSA layer using a photo curable PSA composition is often carried out in an embodiment where the PSA composition is placed between two sheets and subjected to photoirradiation for curing in a state where the air is blocked.

According to the art disclosed herein, a PSA layer is readily obtained that shows an improved transmittance (transparency). The transmittance of the PSA layer disclosed herein is not particularly limited. For instance, the transmittance of the PSA layer is preferably 60 % or higher, more preferably 70 % or higher, or yet more preferably 80 % or higher (e.g. 85 % or higher). The maximum transmittance of the PSA layer is not particularly limited. From the standpoint of achieving a balance with other properties such as thermal conduction and adhesive properties, it is usually suitably 99 % or lower, possibly 95 % or lower, or even 90 % or lower.

The transmittance of the PSA sheet disclosed herein is not particularly limited. For instance, the transmittance of the PSA sheet is preferably 50 % or higher, more preferably 65 % or higher, or yet more preferably 80 % or higher (e.g. 85 % or higher). The maximum transmittance of the PSA sheet is not particularly limited. From the standpoint of achieving a balance with other properties such as thermal conduction and adhesive properties, it is usually suitably 99 % or lower, possibly 95 % or lower, or even 90 % or lower.

Here, the transmittance of the PSA layer or PSA sheet can be determined at a temperature of 23 °C at a measurement wavelength of 400 nm, using a commercial transmittance meter (e.g. a high-speed integrating sphere spectrophotometric transmittance meter, model DOT-3, available from Murakami Color Research Laboratory). More specifically, the transmittance of the PSA layer or PSA sheet can be determined by the method described later in Examples. The transmittance can be adjusted by selecting, for instance, certain composition, thickness, etc. for the PSA layer.

The haze value of the PSA layer disclosed herein is not particularly limited. For instance, the PSA layer's haze value is usually suitably 90 % or lower, preferably 80 % or lower, or more preferably 75 % or lower (e.g. 75 % or lower). In a preferable embodiment, the PSA layer's haze value is 60 % or lower, more preferably 50 % or lower, or yet more preferably 40 % or lower. The minimum haze value of the PSA layer is not particularly limited. From the standpoint of achieving a balance with other properties (e.g. adhesive strength, etc.), the PSA layer's haze value is usually 0.5 % or higher, possibly 10 % or higher, 20 % or higher, or even 30 % or higher. For instance, in an embodiment where the PSA layer includes a thermally conductive filler, the PSA layer's haze value can be 30 % or higher, 35 % or higher, 40 % or higher, 50 % or higher, 60 % or higher, or even 65 % or higher.

The haze value of the PSA sheet disclosed herein is not particularly limited. For instance, the PSA sheet's haze value is usually suitably 90 % or lower, preferably 85 % or lower, or more preferably 75 % or lower (e.g. 75 % or lower). In a preferable embodiment, the PSA sheet's haze value is 60 % or lower, more preferably 50 % or lower, or yet more preferably 40 % or lower. The minimum haze value of the PSA sheet is not particularly limited. From the standpoint of achieving a balance with other properties (e.g. adhesive strength, etc.), the PSA sheet's haze value is usually 0.5 % or higher, possibly 10 % or higher, 20 % or higher, or even 30 % or higher. For instance, in an embodiment having a PSA layer that includes a thermally conductive filler, the PSA sheet's haze value can be 30 % or higher, 35 % or higher, 40 % or higher, 50 % or higher, 60 % or higher, or even 65 % or higher.

Here, the "haze value" refers to the ratio of diffused light transmittance to total light transmittance when the analytical sample is irradiated with visible light. It is also called the cloudiness value. The haze value can be expressed by the equation below.

$$Th\ (\%) = Td/Tt \times 100$$

In the equation, Th is the haze value (%), Td is the diffused light transmittance, and Tt is the total light transmittance. The haze value can be adjusted by selecting, for instance, certain composition, thickness, etc. for the PSA layer.

<Applications>

The present description provides a highly adhesive PSA layer that has a high refractive index. Thus, the PSA layer disclosed herein is favorable as a PSA layer used in a PSA sheet for optical applications. In other words, a PSA sheet having the PSA layer disclosed herein is favorable as a PSA sheet for optical applications. For instance, the PSA layer disclosed herein or a PSA sheet having the PSA layer is useful as an adhesive optical component that uses an optical material for its support. When optical film is used as the optical material, the adhesive optical component is used as a PSA-layer-bearing optical film. Examples of usable optical film include a polarizing plate, retardation plate, optical compensation film, brightness enhancement film, hard coat (HC) film, anti-glare film, impact-absorbing film, anti-fouling film, photochromic film, light control film, wavelength-selective absorbing film, wavelength conversion film, and a laminate of these.

Examples of the resin material used as the optical film include polyester-based resins such as polyethylene terephthalate and polyethylene naphthalate; cellulose-based resins such as triacetyl cellulose; acetate-based resins; polysulfone-based resins; polyether sulfone-based resins; polycarbonate-based resins; polyamide-based resins; polyimide-based resins; polyolefinic resins; cyclic polyolefinic resins (such as norbornene-based resins); acrylic resins; polyvinyl chloride-based resins; polyvinylidene chloride-based resins; polystyrene-based resins; polyvinyl alcohol-based resins; polyarylate-based resins; and polyphenylene sulfide-based resins; a mixture of these. Particularly preferable materials include polyester-based resins, cellulose-based resins, polyimide-based resins and polyether sulfone-based resins.

The PSA sheet disclosed herein is not limited to the applications described above and can be suitably used in applications where it is applied to, for instance, components of various portable devices for purposes such as fixing, connecting, heat radiating, heat transferring, shaping, decorating, protecting, and supporting the components. Here, being portable means not just providing simple mobility, but further providing a level of portability that allows an individual (average adult) to carry it relatively easily. Examples of the portable devices referred to herein include portable electronic devices such as mobile phones, smartphones, tablet PCs, notebook PCs, various wearable devices, digital cameras, digital video cameras, acoustic equipment (portable music players, IC recorders, etc.), computing devices (calculators, etc.), portable game devices, electronic dictionaries, electronic notebooks, electronic books, automotive information systems, portable radios, portable televisions, portable printers, portable scanners and portable modems as well as mechanical wristwatches and pocket watches, flashlights and hand mirrors. Examples of components of portable electronic devices may include optical films and display panels used in image display units such as liquid crystal displays and organic EL displays. The PSA sheet disclosed herein may be preferably used in applications where it is applied to various components in automobiles, home electric appliances and the like for purposes such as fixing, connecting, heat radiating, heat transferring, shaping, decorating, protecting, and supporting the components.

When the PSA layer disclosed herein includes a thermally conductive filler, a PSA sheet having the PSA layer can be used for heat dissipation of an adherend or heat conduction via the PSA sheet. Furthermore, the PSA sheet disclosed herein is highly transparent. Thus, with respect to a device constructed with the PSA sheet, the device is likely to be constructed with increased accuracy. Accordingly, the PSA sheet disclosed herein is suited for fixing, attaching and supporting members in high-tech devices as well as for heat dissipation of components in high-tech devices, small high-tech devices and the like that require high levels of accuracy; or for heat conduction through the PSA sheet.

EXAMPLES

Several working examples related to the present invention are described below, but these specific examples are not to limit the present invention. In the description below, "parts" and "%" are by weight unless otherwise specified.

<Example 1>

(Preparation of acrylic monomer syrup)

Were mixed 50 parts of 2-ethylhexyl acrylate (2EHA), 50 parts of benzyl acrylate (product name VISCOAT #160 available from Osaka Organic Chemical Industry, Ltd.), 5 parts of N-vinyl-2-pyrrolidone (NVP), 2 parts of acrylic acid (AA) and 1 part of 4-hydroxbutyl acrylate (4HBA) as monomers; and 0.05 part of 1-hydroxycyclohexyl phenyl ketone (trade name IRGACURE 184 available from BASF Corporation) and 0.05 part of 2,2-dimethoxy-1,2-diphenylethane-1-one (trade name IRGACURE 651 available from BASF Corporation) as photopolymerization initiators. The resulting mixture was subjected to UV irradiation under a nitrogen atmosphere. The polymerization was carried out to a viscosity

of about 10 Pas (BH viscometer, No. 5 rotor, 10 rpm, measurement temperature 30 °C) to prepare an acrylic polymer A as an acrylic polymer syrup, which was a partial polymer (5 % conversion).

(Preparation of PSA composition)

To 30 parts of the resulting acrylic polymer A (acrylic polymer syrup), was added 30 parts of phenylphenol acrylate (ethoxylated o-phenylphenol acrylate, product name A-LEN-10 available from Shin-Nakamura Chemical Co., Ltd.) and were further admixed 0.03 part of dipentaerythritol hexaacrylate (product name KAYARAD DPHA available from Nippon Kayaku Co., Ltd.) as a polyfunctional monomer, 60 parts of aluminum hydroxide (product name Aluminum Hydroxide B103 available from Nippon Keikinzoku KK, mean particle diameter 7 μm) as a thermally conductive filler and 0.75 part of a filler-dispersing agent (product name PLYSURF A212E available from DKS Co., Ltd.). The resulting mixture was stirred at 1200 rpm for 5 minutes to prepare a PSA composition A.

(Formation of PSA layer)

Two different release liners R1 and R2 were obtained, each having a release surface formed with a silicone-based release agent on one side of a polyester film. As the release liner R1, was used product name DIAFOIL MRF (38 μm thick) available from Mitsubishi Plastics, Inc. As the release liner R2, was used product name DIAFOIL MRE (38 μm thick) available from Mitsubishi Plastics, Inc.

The PSA composition A prepared above was applied to the release surface of release liner R1 to form a 50 μm thick coating layer. Subsequently, to the surface of the coating layer was covered with release liner R2 with the release surface on the coating layer side to block oxygen from the coating layer. Using a chemical light lamp available from Toshiba Corporation, the laminate sheet (having a layered structure of release liner R1/coating layer/release liner R2) was irradiated by UV at an intensity of 3 $mW/cm^2$ for 360 seconds to cure the coating layer and form a PSA layer. A PSA sheet formed of the PSA layer was thus fabricated. The intensity value was determined by an industrial UV checker (available from Topcon Corporation, product name UVR-T1 with light detector model number UD-T36) with peak sensitivity at 350 nm in wavelength.

<Example 2>

Were mixed 45 parts of n-butyl acrylate (BA), 45 parts of benzyl acrylate (product name VISCOAT #160 available from Osaka Organic Chemical Industry, Ltd.), 10 parts of N-vinyl-2-pyrrolidone (NVP) and 2 parts of 4-hydroxbutyl acrylate (4HBA) as monomers; and 0.05 part of 1-hydroxycyclohexyl phenyl ketone (trade name IRGACURE 184 available from BASF Corporation) and 0.05 part of 2,2-dimethoxy-1,2-diphenylethane-1-one (trade name IRGACURE 651 available from BASF Corporation) as photopolymerization initiators. The resulting mixture was subjected to UV irradiation under a nitrogen atmosphere. The polymerization was carried out to a viscosity of about 10 Pa·s (BH viscometer, No. 5 rotor, 10 rpm, measurement temperature 30 °C) to prepare an acrylic polymer B as an acrylic polymer syrup, which was a partial polymer (5 % conversion).

To 20 parts of the resulting acrylic polymer B (acrylic polymer syrup), was added 10 parts of phenylphenol acrylate (ethoxylated o-phenylphenol acrylate, product name A-LEN-10 available from Shin-Nakamura Chemical Co., Ltd.) and were further admixed 0.015 part of dipentaerythritol hexaacrylate (product name KAYARAD DPHA available from Nippon Kayaku Co., Ltd.) as a polyfunctional monomer, 30 parts of magnesium hydroxide (product name KISUMA 5A available from Kyowa Chemical Industry Co. Ltd., mean primary particle diameter 1 μm) as a thermally conductive filler and 0.76 part of a filler-dispersing agent (product name PLYSURF A212E available from DKS Co., Ltd.). The resulting mixture was stirred at 1200 rpm for 5 minutes to prepare a PSA composition B.

Using the resulting PSA composition B in place of the PSA composition A, but otherwise in the same manner as Example 1, was prepared a PSA sheet according to this Example.

<Example 3>

To 16.2 parts of the resulting acrylic polymer B (acrylic polymer syrup), was added 13.8 parts of phenylphenol acrylate (ethoxylated o-phenylphenol acrylate, product name A-LEN-10 available from Shin-Nakamura Chemical Co., Ltd.) and were further admixed 0.015 part of dipentaerythritol hexaacrylate (product name KAYARAD DPHA available from Nippon Kayaku Co., Ltd.) as a polyfunctional monomer, 30 parts of aluminum hydroxide (product name Aluminum Hydroxide BF013 available from Nippon Keikinzoku KK, mean primary particle diameter 1 μm) as a thermally conductive filler and 0.38 part of a filler-dispersing agent (product name PLYSURF A212E available from DKS Co., Ltd.). The resulting mixture was stirred at 1200 rpm for 5 minutes to prepare a PSA composition C.

Using the resulting PSA composition C in place of the PSA composition A, but otherwise in the same manner

as Example 1, was prepared a PSA sheet according to this Example.

<Example 4>

To 40 parts of the resulting acrylic polymer B (acrylic polymer syrup), was added 20 parts of phenylphenol acrylate (ethoxylated o-phenylphenol acrylate, product name A-LEN-10 available from Shin-Nakamura Chemical Co., Ltd.) and were further admixed 0.03 part of dipentaerythritol hexaacrylate (product name KAYARAD DPHA-40H available from Nippon Kayaku Co., Ltd.) as a polyfunctional monomer, 30 parts of magnesium hydroxide (product name KISUMA 5A available from Kyowa Chemical Industry Co. Ltd., mean primary particle diameter 1 μm), 30 parts of magnesium hydroxide (product name Magnesium Hydroxide #300 available from Konoshima Co., Ltd., mean primary particle diameter 5 μm) as thermally conductive fillers and 1.52 parts of a filler-dispersing agent (product name PLYSURF A212E available from DKS Co., Ltd.). The resulting mixture was stirred at 1200 rpm for 5 minutes to prepare a PSA composition D.

Using the resulting PSA composition D in place of the PSA composition A, but otherwise in the same manner as Example 1, was prepared a PSA sheet according to this Example.

<Example 5>

Were mixed 80 parts of 2-ethylhexyl acrylate (2EHA), 12 parts of 2-methoxyethyl acrylate (MEA), 7 parts of N-vinyl-2-pyrrolidone (NVP) and 1 part of N-(2-hydroxyethyl)acrylamide (HEAA) as monomers; and 0.05 part of 1-hydroxycyclohexyl phenyl ketone (trade name IRGACURE 184 available from BASF Corporation) and 0.05 part of 2,2-dimethoxy-1,2-diphenylethane-1-one (trade name IRGACURE 651 available from BASF Corporation) as photopolymerization initiators. The resulting mixture was subjected to UV irradiation under a nitrogen atmosphere. The polymerization was carried out to a viscosity of about 20 Pa·s (BH viscometer, No. 5 rotor, 10 rpm, measurement temperature 30 °C) to prepare a partial polymer (5 % conversion). To 70 parts of the resulting partial polymer, was added 30 parts of 2-ethylhexyl acrylate (2EHA) as a diluent monomer to prepare an acrylic polymer C as an acrylic polymer syrup.

Were mixed 42 parts of the resulting acrylic polymer C (acrylic polymer syrup), 0.05 part of dipentaerythritol hexaacrylate (product name KAYARAD DPHA available from Nippon Kayaku Co., Ltd.) as a polyfunctional monomer, 120 parts of aluminum hydroxide (product name Aluminum Hydroxide B103 available from Nippon Keikinzoku KK, mean particle diameter 7 μm) as a thermally conductive filler and 0.75 part of a filler-dispersing agent (product name PLYSURF A212E available from DKS Co., Ltd.). The resulting mixture was stirred at 1200 rpm for 5 minutes to prepare a PSA composition E.

Using the resulting PSA composition E in place of the PSA composition A, but otherwise in the same manner as Example 1, was prepared a PSA sheet according to this Example.

<Example 6>

Were mixed 50 parts of a difunctional acrylate having a fluorene structure (product name OGSOL EA-0300 available from Osaka Gas Chemical Co., Ltd.), 10 parts of phenylphenol acrylate (ethoxylated o-phenylphenol acrylate, product name A-LEN-10 available from Shin-Nakamura Chemical Co., Ltd.), 60 parts of aluminum hydroxide (product name Aluminum Hydroxide B103 available from Nippon Keikinzoku KK, mean particle diameter 7 μm) as a thermally conductive filler and 0.75 part of a filler-dispersing agent (product name PLYSURF A212E available from DKS Co., Ltd.). The resulting mixture was stirred at 1200 rpm for 5 minutes to prepare a PSA composition F.

Using the resulting PSA composition F in place of the PSA composition A, but otherwise in the same manner as Example 1, was prepared a PSA sheet according to this Example.

Table 1 summarizes the glass transition temperatures of the acrylic polymers (base polymers) in the PSAs according to the respective Examples.

<Refractive index>

With respect to the PSA sheets (i.e. PSA layers) according to the respective Examples, refractive indices were determined at a wavelength of 589 nm at 23 °C (the same applies to the refractive index determination of thermally conductive filler below), using a multi-wavelength Abbe refractometer (model DR-M2 available from ATAGO Co., Ltd.). The results are shown under "PSA layer" in Table 1. With respect to the aluminum hydroxide and/or magnesium hydroxide used as the thermally conductive filler(s) to prepare the PSA sheets according to the respective Examples, refractive indices were measured. The resulting value is shown under "Thermally conductive filler" in Table 1. With respect to the PSA sheet according to each Example, from the thermally conductive filler's refractive index, the PSA layer's refractive index was subtracted to determine the difference. The results are shown under "Difference in refractive index" in Table 1.

determination of haze value>

From the PSA sheet according to each Example, the release liner R1 was removed and the exposed adhesive face was applied to one face of an alkali glass with 0.1 % haze. The resultant was heated at 80 °C for 5 minutes so that sufficient adhesive strength was exhibited to the alkali glass. Subsequently, the release liner R2 was removed from the PSA sheet to prepare a test piece. Using a haze meter (MR-100 available from Murakami Color Research Laboratory Co., Ltd.), the haze value of the test piece was determined. For the measurement, the alkali glass bearing the PSA sheet was arranged so that the PSA layer faced the light source. As the haze value of the alkali glass was 0.1 %, 0.1 % was subtracted from the measured value to determine the haze value of the PSA sheet (PSA layer). The results are shown under "Haze value" in Table 1.

<Determination of to-SUS adhesive strength>

Using a 20 mm wide strip obtained by cutting the PSA sheet according to each Example along with the release liner as a test piece and using a SUS plate (SUS304BA plate) washed with toluene as the adherend, the adhesive strength (post-heat adhesive strength) was determined according to the following procedure.

(Determination of adhesive strength)

In a standard environment at 23 °C and 50 % RH, the release liner covering the adhesive face of each test piece was removed. The exposed adhesive face was press-bonded to the adherend with a 2 kg roller moved back and forth once. The test piece thus press-bonded to the adherend was heated at 80 °C for 5 minutes and then left standing for 30 minutes in the standard environment. Subsequently, using a universal tensile/compression testing machine (machine name "tensile and compression testing machine, TCM-1kNB" available from Minebea Co., Ltd.), based on JIS Z 0237, at a peel angle of 180°, at a tensile speed of 300 mm/min, the 180° peel strength (resistive force against the tension) was determined. The measurement was carried out three times. Their mean value is shown under "Adhesive strength" as the adhesive strength (post-heat adhesive strength) in Table 1.

<Determination of thermal conductivity>

With respect to the PSA sheet (i.e. PSA layer) according to each Example, thermal conductivity in the thickness direction was evaluated, using the thermal analysis instrument shown in Fig. 3(a), (b). Here, Fig. 3(a) shows a diagram outlining the front view of the thermal analysis instrument and Fig. 3(b) shows a diagram outlining the lateral view of the thermal analysis instrument. It is noted that the release liners R1 and R2 were removed for the measurement.

In particular, a PSA sheet S (20 mm × 20 mm square) was brought in tight contact with a pair of 20 mm side cube blocks (or rods) L made of aluminum (A5052, thermal conductivity: 140 W/m·K), thereby bonding the pair of blocks L to each other with the PSA sheet S. Then, the pair of rods L were vertically aligned between a heater block H and a heat radiator C (a cooling base plate with internally circulating cooling water). Specifically, the heater block H was arranged on the top block L and the heat radiator C was placed under the bottom block L.

Here, the pair of blocks L in tight contact with the PSA sheet S were positioned between a pair of pressure-adjusting screws J put through the heater block H and heat radiator C. A load cell R was placed between each pressure-adjusting screw J and the heater block H so as to measure the pressure when tightening the pressure-adjusting screw J. The pressure measured was used as the pressure applied on the PSA sheet S. In particular, in this test, the pressure-adjusting screws J were tightened to a pressure of 25 $N/cm^2$ (250 kPa) applied on the PSA sheet S.

Three probes P (1 mm diameter) of a contact displacement meter were put through the bottom block L to the PSA sheet S from the heat radiator C side. Here, the top end of each probe P was placed in contact with the bottom face of the top block L to enable measurement of the distance between the top and bottom blocks L (the thickness of the PSA sheet S).

Temperature sensors D were installed in the heater block H and the top and bottom blocks L. In particular, a temperature sensor D was attached to one location in the heater block H. In addition, to five locations in each block L, temperature sensors D were attached at 5 mm intervals in the vertical direction.

For the measurement, the pressure-adjusting screws J were tightened to apply pressure to the PSA sheet S; while the temperature of the heater block H was set at 80 °C, cooling water at 20° C was allowed to circulate through the heat radiator C.

After the temperatures of the heater block H and the top and bottom blocks L stabilized, the temperatures of the top and bottom blocks L were measured with the respective temperature sensors D. From the thermal conductivities (W/m·K) of the top and bottom blocks L and the temperature gradient between them, the heat flux passing through the PSA sheet S was determined, and the temperatures at the interfaces between the PSA sheet S and the top and bottom

blocks L were determined. Using these values and the thermal conductivity formulas (Fourier's law) shown below, the thermal conductivity (W/m·K) at the particular pressure was determined. The resulting values are shown under "Thermal conductivity" in Table 1.

$$Q = -\lambda \mathrm{grad}T$$

wherein

Q: heat flow per unit area
gradT: temperature gradient
λ: thermal conductivity

[Table 1]

Table 1

| | Acrylic polymer's Tg (°C) | Refractive index | | | Test results | | |
|---|---|---|---|---|---|---|---|
| | | PSA layer | Thermally conductive filler | Difference in refractive index | Adhesive strength (N/ 20mm) | Haze value (%) | Thermal conductivity (W/m·K) |
| Ex. 1 | -5.2 | 1.562 | 1.57 | 0.008 | 7.1 | 66.1 | 0.34 |
| Ex. 2 | -6.8 | 1.55 | 1.562 | 0.012 | 16.8 | 33 | 0.42 |
| Ex. 3 | -0.5 | 1.559 | 1.57 | 0.011 | 15.7 | 55.5 | 0.39 |
| Ex. 4 | -6.8 | 1.55 | 1.562 | 0.012 | 20.2 | 35.3 | 0.32 |
| Ex. 5 | -28.8 | 1.486 | 1.57 | 0.084 | 9.5 | 98.3 | 0.37 |
| Ex. 6 | 19.1 | 1.579 | 1.57 | -0.009 | 0.7 | 25 | 0.33 |

As evident from the results shown in Table 1, with respect to the PSA sheets of Examples 1 to 4 with the respective PSA layers having refractive indices of 1.54 or higher and the acrylic polymers (base polymers) of the PSA in the PSA layer having glass transition temperatures of 5 °C or lower, the PSA sheets (PSA layers) had clearly low haze values, showing improved transparency as compared to the PSA sheet of Example 5 with the PSA layer having a refractive index below 1.54. The PSA sheets of Examples 1 to 4 also showed clearly higher adhesive strength as compared to the PSA sheet of Example 6 with the acrylic polymer in the PSA having a glass transition temperature above 5 °C.

The PSA sheets of Examples 1 to 4 also had low haze values, showing high transparency even though they included aluminum hydroxide or magnesium hydroxide as the thermally conductive filler with thermal conductivities of 0.32 W/m·K or greater.

Although specific embodiments of the present invention have been described in detail above, these are merely for illustrations and do not limit the scope of claims. The art according to the claims includes various modifications and changes made to the specific embodiments illustrated above.

[Reference Signs List]

10 PSA sheet (adhesively double-faced PSA sheet)
12 PSA layer
12A first adhesive face
12B second adhesive face
14 release liner
16 release liner
20 PSA sheet (adhesively double-faced PSA sheet)
22 support substrate
22A first face
22B second face
24: first PSA layer
24A: first PSA layer's surface (first adhesive face)
26: second PSA layer
26A: second PSA layer's surface (second adhesive face)
28: release liner
29: release liner
100 release-lined PSA sheet
200 release-lined PSA sheet

## Claims

1. A pressure-sensitive adhesive layer that comprises a pressure-sensitive adhesive obtained using a pressure-sensitive adhesive composition comprising a base polymer, wherein
the pressure-sensitive adhesive layer has a refractive index of 1.54 or higher, and
the base polymer has a glass transition temperature of 5 °C or lower.

2. The pressure-sensitive adhesive layer according to Claim 1, wherein the base polymer is an acrylic polymer.

3. The pressure-sensitive adhesive layer according to Claim 2, wherein
the acrylic polymer is a polymer of monomers that includes both n-butyl acrylate and 2-ethylhexyl acrylate or one of the two, and
the total amount of the n-butyl acrylate and the 2-ethylhexyl acrylate is at least 20 % by weight of the total amount of the monomers.

4. The pressure-sensitive adhesive layer according to any one of Claims 1 to 3, further comprising a thermally conductive filler.

5. The pressure-sensitive adhesive layer according to Claim 4, comprising a hydrated metal compound as the thermally conductive filler.

6. The pressure-sensitive adhesive layer according to Claim 4 or 5, wherein the pressure-sensitive adhesive layer and the thermally conductive filler differ in refractive index by within ±0.04.

7. A pressure-sensitive adhesive sheet having the PSA layer according to any one of Claims 1 to 6.

[Fig. 1]

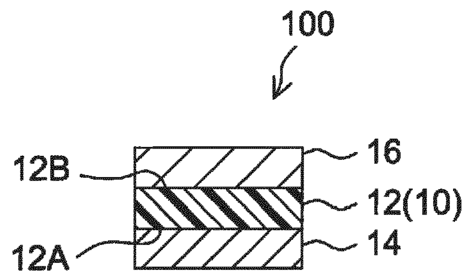


[Fig. 2]

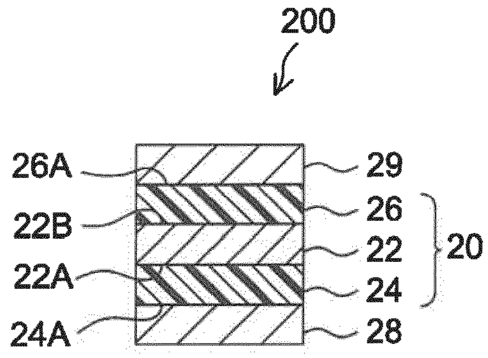

[Fig. 3]

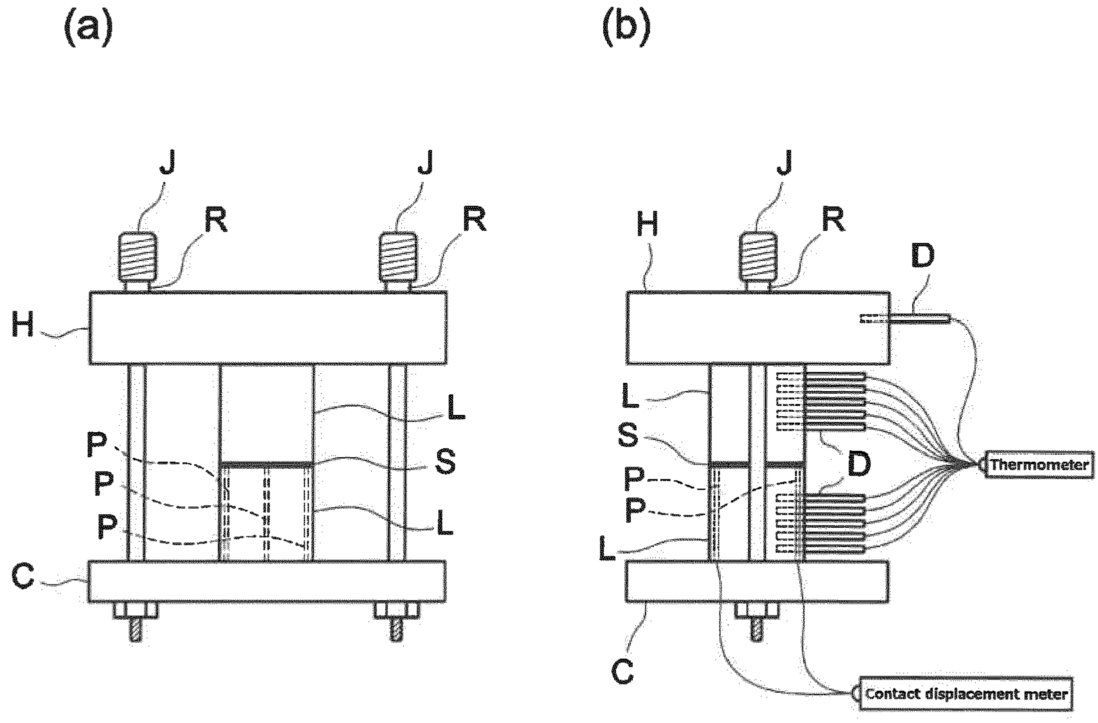

Europäisches Patentamt
European Patent Office
Office européen des brevets

# EUROPEAN SEARCH REPORT

Application Number
EP 20 15 6913

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 3 599 261 A1 (NITTO DENKO CORP [JP]) 29 January 2020 (2020-01-29) * paragraphs [0001], [0005], [0122] - [0124], [0140]; claims; example 5; table 1 * | 1-7 | INV. C08K3/10 C09J7/38 |
| X | EP 1 678 529 A1 (3M INNOVATIVE PROPERTIES CO [US]) 12 July 2006 (2006-07-12) * paragraphs [0001], [0008]; claims; examples PSA-3, LAM-3; table 1 * | 1-3,7 | |
| X | US 2010/048804 A1 (DETERMAN MICHAEL D [US] ET AL) 25 February 2010 (2010-02-25) * paragraph [0002]; claims; examples 8,12,31,34; table Table II and IV * | 1-3,7 | |
| X | US 2016/084991 A1 (UMEMOTO TORU [JP] ET AL) 24 March 2016 (2016-03-24) * paragraphs [0001], [0002]; claims; figure Figure 7(c); examples Inventiv Ex.3, base PSA material C; table 1 * | 1-3,7 | TECHNICAL FIELDS SEARCHED (IPC) |
| X | EP 2 674 464 A1 (NITTO DENKO CORP [JP]) 18 December 2013 (2013-12-18) * paragraphs [0001], [0008]; claims; examples 1-11 * | 1-7 | C08K C09J |
| T | Rodney J. Andrews ET AL: "Glass Transition Temperatures of Polymers" In: "Polymer Handbook (4th Edition)", 1 January 1999 (1999-01-01), John Wiley & Sons, XP055207302, ISBN: 978-0-47-116628-3 vol. 7, pages VI-193, * the whole document * | 1-7 | |

The present search report has been drawn up for all claims

| Place of search | Date of completion of the search | Examiner |
|---|---|---|
| Munich | 2 July 2020 | Fodor, Csaba |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 20 15 6913

This annex lists the patent family members relating to the patent documents cited in the above-mentioned European search report. The members are as contained in the European Patent Office EDP file on
The European Patent Office is in no way liable for these particulars which are merely given for the purpose of information.

02-07-2020

| Patent document cited in search report | Publication date | Patent family member(s) | Publication date |
|---|---|---|---|
| EP 3599261 A1 | 29-01-2020 | CN 110783287 A | 11-02-2020 |
| | | EP 3599261 A1 | 29-01-2020 |
| | | JP 2020023672 A | 13-02-2020 |
| | | KR 20200012775 A | 05-02-2020 |
| | | US 2020031028 A1 | 30-01-2020 |
| EP 1678529 A1 | 12-07-2006 | CN 1875296 A | 06-12-2006 |
| | | EP 1678529 A1 | 12-07-2006 |
| | | JP 2007512552 A | 17-05-2007 |
| | | KR 20060095573 A | 31-08-2006 |
| | | US 6842288 B1 | 11-01-2005 |
| | | WO 2005045479 A1 | 19-05-2005 |
| US 2010048804 A1 | 25-02-2010 | US 2010048804 A1 | 25-02-2010 |
| | | US 2013196149 A1 | 01-08-2013 |
| US 2016084991 A1 | 24-03-2016 | CN 105190367 A | 23-12-2015 |
| | | JP 6266619 B2 | 24-01-2018 |
| | | JP 6644752 B2 | 12-02-2020 |
| | | JP 2018072837 A | 10-05-2018 |
| | | JP WO2015108159 A1 | 23-03-2017 |
| | | KR 20150112003 A | 06-10-2015 |
| | | TW 201542380 A | 16-11-2015 |
| | | US 2016084991 A1 | 24-03-2016 |
| | | WO 2015108159 A1 | 23-07-2015 |
| EP 2674464 A1 | 18-12-2013 | CN 103347971 A | 09-10-2013 |
| | | EP 2674464 A1 | 18-12-2013 |
| | | JP 5812754 B2 | 17-11-2015 |
| | | JP 2012180495 A | 20-09-2012 |
| | | KR 20140048842 A | 24-04-2014 |
| | | TW 201233761 A | 16-08-2012 |
| | | US 2014004342 A1 | 02-01-2014 |
| | | WO 2012108289 A1 | 16-08-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019025855 A
- JP 2018072837 A
- JP 2007051271 A

### Non-patent literature cited in the description

- Polymer Handbook. John Wiley & Sons, Inc, 1989